(19) **Europäisches Patentamt**
**European Patent Office**
**Office européen des brevets**

(11) **EP 4 074 802 A1**

(12) **EUROPEAN PATENT APPLICATION**
published in accordance with Art. 153(4) EPC

(43) Date of publication:
**19.10.2022 Bulletin 2022/42**

(21) Application number: **21785436.3**

(22) Date of filing: **07.04.2021**

(51) International Patent Classification (IPC):
**C09J 119/02** (2006.01)  **C08K 5/1515** (2006.01)
**C08L 75/04** (2006.01)  **C08K 5/17** (2006.01)
**C09J 7/25** (2018.01)  **B60C 9/00** (2006.01)
**D02G 3/48** (2006.01)

(52) Cooperative Patent Classification (CPC):
**B60C 9/00; C08K 5/1515; C08K 5/17; C08L 75/04;
C09J 7/25; C09J 119/02; D02G 3/48**

(86) International application number:
**PCT/KR2021/004370**

(87) International publication number:
**WO 2021/206454 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2020 KR 20200043568**

(71) Applicant: **Kolon Industries, Inc.
Seoul 07793 (KR)**

(72) Inventors:
• **LEE, Sung Gyu**
**Seoul 07793 (KR)**
• **JEON, Ok Hwa**
**Seoul 07793 (KR)**
• **LEE, Min Ho**
**Seoul 07793 (KR)**

(74) Representative: **Ter Meer Steinmeister & Partner
Patentanwälte mbB
Nymphenburger Straße 4
80335 München (DE)**

(54) **ADHESIVE COMPOSITION FOR TIRE CORD, TIRE CORD, AND TIRE**

(57)    This invention relates to an adhesive composition for a tire cord including: an epoxy compound; latex; an alicyclic polyurethane resin having a weight average molecular weight (Mw) of 250,000 to 350,000; an amine compound; and water, a tire cord including an adhesive layer formed form the adhesive composition, and a tire including the tire cord.

【FIG. 1】

EP 4 074 802 A1

**Description**

**[TECHNICAL FIELD]**

This invention relates to an adhesive composition for a tire cord, a tire cord, and a tire.

**[BACKGROUND OF ART]**

In order to reinforce the strength of rubber structures, fiber reinforcing materials are used. For example, in rubber tires, polyester fiber, polyamide fiber, aromatic polyamide fiber, polyvinyl alcohol fiber, or the like may be used as reinforcing materials. And, in some cases, adhesion between fiber and rubber is not good according to the fiber, and thus, the adhesive is coated on the surface of the fiber to supplement adhesion between the fiber and the rubber. For example, in order to improve adhesive strength between polyester fiber for the tire cord (raw cord) and the tire rubber, the adhesive is coated on the polyester fiber.

In general, in the adhesive for the above purpose, rubber (or latex) including resorcinol-formaldehyde or a component derived therefrom is included. However, RF including resorcinol, a kind of phenol, and formaldehyde known as a carcinogen is known to be harmful to the human body. And, for adhesive waste liquid including RF, specific post management and post treatment cost are often required.

Meanwhile, as a method of coating the above adhesive composition on fiber reinforcing material, dipping or spraying may be considered. In this preparation process, each component constituting the adhesive composition should be uniformly mixed and dispersed in a solvent included in the composition. And, even after the composition in which each component is uniformly mixed and dispersed is dipped or sprayed, it should be uniformly coated on the surface of fiber reinforcing material in an appropriate amount. If the components of the composition are not sufficiently mixed or flowability of the composition increases excessively due to the excessive use of solvents, adhesive strength is not secured.

**[DETAILED DESCRIPTION OF THE INVENTION]**

**[Technical Problem]**

It is an object of the invention to provide an environment-friendly adhesive composition for a tire cord that can significantly improve adhesive strength and heat resistant adhesive strength between tire rubber and tire cord.

It is another object of the invention to provide tire cord that has high adhesive strength and heat resistant adhesion to tire rubber, and thus, can improve durability of a tire.

It is another object of the invention to provide a tire including the tire cord.

**[Technical Solution]**

There is provide herein an adhesive composition for tire cord including: an epoxy compound; latex; an alicyclic polyurethane resin having a weight average molecular weight (Mw) of 250,000 to 350,000; an amine compound; and water.

There is also provided herein tire cord including: a fiber substrate; and an adhesive layer formed on the fiber substrate, and formed from the adhesive composition for a tire cord.

There is also provided herein tire cord including: a fiber substrate; and an adhesive layer formed on the fiber substrate, and including an epoxy compound, latex, an alicyclic polyurethane resin having weight average molecular weight (Mw) of 250,000 to 350,000, and an amine compound.

There is also provided herein a tire including the tire cord.

Hereinafter, an adhesive composition for a tire cord, a tire cord, and a tire according to specific embodiments of the invention will be explained in detail.

As used herein, a weight average molecular weight means a weight average molecular weight of polystyrene conversion measured by a GPC method. In the process of measuring the weight average molecular weight of polystyrene conversion measured by GPC, commonly known analysis equipment, a detector such as a refractive index detector and an analysis column may be used, and commonly applied temperature conditions, solvent, and flow rate may be applied.

As specific example of the measurement conditions, a 0.05 % - LiCl/DMF solution used for analysis is prepared by weighing 2.12 g of anhydrous lithium chloride (LiCl), putting in a 1 ℓ volumetric flask, and dissolving in NN-dimethyl formamide (DMF). 0.0250 g (25 mg) of a polymer sample such as polyurethane resin was introduced into a vial, and 10 mℓ of 0.05 %-LiCl/DMF was added and dissolved. And then, the solution was filtered using a syringe filter having a pore size of 0.45 $\mu$m, and 100 $\mu$ℓ of the solution was introduced into GPC, and as the mobile phase of GPC, LiC/DMF was used and introduced at a flow rate of 1.0 mL/min, and as columns, one Agilent PLgel 5 $\mu$m Guard (7.5 x 50 mm) and 2

Agilent PLgel 5 $\mu$m Mixed D (7.5 x 300 mm) were connected in series, and as a detector, an Agilent 1260 Infinity II System, RI Detector was used, and measurement temperature was 40 °C.

In the case of standard material, 0.0050 g (5mg) of polystyrene was introduced into a vial, 5 m$\ell$ of 0.05 %-LiCl/DMF was added and dissolved, and measurement was conducted by the above method. Calibration curve was drawn through PS 842000, 193000, 65000, 16200, and 4000.

According to one embodiment of the invention, there is provided an adhesive composition for a tire cord including: an epoxy compound; latex; an alicyclic polyurethane resin having weight average molecular weight (Mw) of 250,000 to 350,000; an amine compound; and water.

The inventors confirmed through experiments that an adhesive composition applied for a tire cord, even if including a common polyurethane resin, cannot sufficiently secure adhesive strength, while in case an alicyclic polyurethane resin having a predetermined weight average molecular weight is used, adhesive strength and heat resistant adhesive strength can be significantly improved, and particularly, high adhesive strength and heat resistant adhesion to tire rubber may be exhibited, and thus, durability of a tire can be improved, and completed the invention.

More specifically, since alicyclic polyurethane resin included in the adhesive composition for tire cord has a weight average molecular weight (Mw) of 250,000 to 350,000, the adhesive composition for a tire cord may have similar viscosity to latex at room temperature, hydrolysis does not occur even at a high temperature, and the composition has high adhesion and is stable during stirring.

Specifically, the lower limit of the weight average molecular weight (Mw) of polyurethane may be, for example, 255,000 or more, 260,000 or more, 265,000 or more, 270,000 or more, 275,000 or more, 280,000 or more, 285,000 or more, 290,000 or more, 295,000 or more, 300,000 or more, or 305,000 or more. And, the upper limit of weight average molecular weight (Mw) of polyurethane may be, for example, 345,000 or less, 340,000 or less, 335,000 or less, 330,000 or less, 325,000 or less, 320,000 or less, 315,000 or less, 310,000 or less, 305,000 or less, or 300,000 or less.

If the weight average molecular weight (Mw) of the alicyclic polyurethane resin is low, the viscosity of the adhesive composition for tire cord may be relatively low, and thus, sufficient adhesive performance may not be exhibited, and high adhesive strength and heat resistant adhesion to tire rubber may not be secured.

If the weight average molecular weight (Mw) of the alicyclic polyurethane resin is high, the viscosity of the adhesive composition for a tire cord may significantly increase, and thus, other components may not be uniformly mixed, and thus, it may be difficult to secure uniform adhesive strength. And, if the weight average molecular weight (Mw) of the alicyclic polyurethane resin is high, the alicyclic polyurethane resin itself may previously react or react with other components to form a gel, and thus, preparation of a uniform adhesive solution may be disturbed, and appearance defects of the product may be generated.

Meanwhile, the alicyclic polyurethane resin having a weight average molecular weight (Mw) of 250,000 to 350,000 protects or captures an amine compound described below, thus enabling stable curing of an adhesive layer (or coating layer) formed from the adhesive composition. And, since polyurethane has excellent affinity with a rubber or latex component, it contributes to stable adhesion of the adhesive composition to an adherend including rubber, thus securing excellent adhesive strength (particularly, heat resistant adhesive strength) to an adherend. And, in case water-dispersed polyurethane is used, abrasion resistance and elasticity of polyurethane may also be secured.

The alicyclic polyurethane resin having a weight average molecular weight (Mw) of 250,000 to 350,000 includes an alicyclic structure, and thus, not only can mechanical strength and dimensional stability of the adhesive composition for a tire cord and a tire cord prepared therefrom be improved, but also heat resistance and fatigue properties can be increased.

To the contrary, in case the adhesive composition for a tire cord includes an aromatic polyurethane resin containing an aromatic group in the molecule, tensile strength or fatigue resistance of the tire cord prepared using the same may be deteriorated, or uniformity or homogeneity of the adhesive composition for a tire cord may be deteriorated, and thus, adhesive strength may be deteriorated.

The alicyclic polyurethane resin having weight average molecular weight (Mw) of 250,000 to 350,000 may include a reaction product between a polyisocyanate including one or more alicyclic groups having a carbon number of 4 to 30 and a polyol, and more specifically, it may include a reaction product between a diisocyanate including one or more alicyclic groups having a carbon number of 4 to 30 and including a central group having a total carbon number of 4 to 40, and a polyol.

The alicyclic diisocyanate may be 4,4'-dicyclohexylmethane diisocyanate (H12MDI), isophorone diisocyanate (IPDI), 1,4-cyclohexylene diisocyanate, or a mixture thereof.

As examples of the polyol, polyester polyol, polyether polyol, polycarbonate polyol, and the like may be mentioned.

The alicyclic polyurethane resin having weight average molecular weight (Mw) of 250,000 to 350,000 may further include an alcohol-based material such as ethylene glycol (EG), 1,4-butane diol (BD), 1,6-hexane diol (HD), trimethylol propane (TMP), and the like, and a chain extender such as ethylene diamine (EDA), diethanolamine, and the like.

Meanwhile, the alicyclic polyurethane resin may be polyurethane dispersed in water ($H_2O$). The content of water included in the water-dispersed polyurethane is not specifically limited. For example, the content of water in the water-dispersed polyurethane may be 40 wt% to 80 wt%, and the other contents may be occupied by polyurethane. According to circumstances, a small amount of known additives may be included in the water-dispersed polyurethane in the content of about 10 wt% or less, about 5 wt% or less, or about 1 wt% or less.

More specifically, the alicyclic polyurethane resin may be a water-dispersed alicyclic polyurethane resin formed from alicyclic polyurethane ionomers.

The water-dispersed alicyclic polyurethane resin formed from alicyclic polyurethane ionomers may be prepared by preparing polyester polyurethane (PU) from an alicyclic polyisocyanate such as 4,4-dicyclohexylmethane diisocyanate (H12MDI), and the like, 1,6-hexane diol (HD), and dimethylol butanoic acid (DMBA), and the like, and neutralizing it with triethylamine (TEA), and then dispersing it in water and chain extending with ethylene diamine (EDA) in water.

More specifically, the alicyclic polyurethane resin may include 1 to 20 mol% of parts derived from one or more compounds selected from the group consisting of dimethylol butanoic acid and dimethylol propionic acid.

In the alicyclic polyurethane resin, the parts derived from one or more compounds selected from the group consisting of dimethylol butanoic acid and dimethylol propionic acid connect ionic functional groups on the surface of the alicyclic polyurethane resin, thus increasing the stabilization degree of the total molecule during dispersion in water, and thereby, the adhesive composition for the tire cord may have adhesive strength and flexibility at a high temperature.

If the content of the parts derived from one or more compounds selected from the group consisting of dimethylol butanoic acid and dimethylol propionic acid in the alicyclic polyurethane resin is too small, a polymerization degree of the alicyclic polyurethane resin may decrease or a molecular weight may not be sufficiently secured.

If the content of the parts derived from one or more compounds selected from the group consisting of dimethylol butanoic acid and dimethylol propionic acid in the alicyclic polyurethane resin is too large, viscosity of the adhesive composition for a tire cord may increase or sludge may be formed in the composition.

Meanwhile, the adhesive composition for tire cord may include 0.5 to 10 wt% of the alicyclic polyurethane resin having a weight average molecular weight (Mw) of 250,000 to 350,000.

If the adhesive composition for a tire cord includes a low content of the alicyclic polyurethane resin compared to the epoxy compound, adhesive performance and fatigue properties may be deteriorated and adhesive performance may be significantly deteriorated. If the adhesive composition for a tire cord includes an excessive content of the alicyclic polyurethane resin compared to the epoxy compound, the concentration of the adhesive composition for tire cord may significantly increase, and thus, sludge may be generated or gel may be generated in the process of applying the adhesive composition, and an appearance defect of the product may be generated.

Meanwhile, the adhesive composition for a tire cord may satisfy viscosity measured using Ubbelohde viscometer at room temperature in the range of 2.50 to 2.85.

The 'room temperature' is a state in which temperature is not specifically increased or decreased, and for example, it may mean a temperature in the range of 15 to 30 °C. Specifically, within the above temperature range, the room temperature may be a temperature of 17 °C or more, 19 °C or more, 21 °C or more or 23 °C or more, and 29 °C or less or 27 °C or less.

And, throughout the specification, unless specifically defined, a temperature at which the evaluation of numerical properties is conducted may be a room temperature.

Specifically, the lower limit of the viscosity of the composition may be, for example, 2.51 or more, 2.52 or more, 2.53 or more, 2.54 or more, 2.55 or more, 2.56 or more, 2.57 or more, 2.58 or more, 2.59 or more, 2.60 or more, 2.61 or more, 2.62 or more, 2.63 or more, 2.64 or more, 2.65 or more, 2.66 or more, 2.67 or more, 2.68 or more, 2.69 or more, or 2.70 or more.

And, the upper limit of the viscosity of the composition may be, for example, 2.84 or less, 2.83 or less, 2.82 or less, 2.81 or less, 2.80 or less, 2.79 or less, 2.78 or less, 2.77 or less, 2.76 or less, 2.75 or less, 2.74 or less, 2.73 or less, 2.72 or less, or 2.71 or less.

In case the adhesive composition for tire cord satisfies the above viscosity range, as shown in the experiments below, an optimal pick up rate may be secured, processability and productivity may be improved, and excellent adhesive strength may be provided.

Particularly, it was confirmed that in case, considering the risk of fire, harmfulness to human body, dispersibility of other components of a composition, and the like, water ($H_2O$) is used as a dispersion medium for an adhesive composition or each constituent included in the composition instead of an organic solvent, the viscosity of the adhesive composition may decrease and sufficient adhesive strength may not be secured.

The epoxy compound functions as a curing agent, thus forming a three-dimensional network structure when heat treating the adhesive, and providing adhesive strength and layer stability to a coating layer formed from the adhesive composition.

Assumed that the above explained viscosity range of the total composition is fulfilled, the kind of the epoxy compounds included in the adhesive composition are not specifically limited. For example, glycidyl ether-based compounds, such as diethylene glycol-diglycidyl ether, polyethylene glycol-diglycidyl ether, polypropylene glycol-diglycidyl ether, neopentyl glycol-diglycidyl ether, 1,6-hexanediol-diglycidylether, glycerol-polyglycidyl ether, trimethylolpropane-polyglycidyl ether, polyglycerol-polyglycidyl ether, pentaerythritol -polyglycidyl ether, diglycerol-polyglycidyl ether, sorbitol-polyglycidyl ether, and the like; novolac-type epoxy resins, such as a phenol novolac type epoxy resin or a cresol novolac type of epoxy resin, and the like; and a bisphenol type of epoxy resin, such as a bisphenol A type of epoxy resin or a bisphenol F type of epoxy resin, and the like may be used.

And, assumed that the above explained viscosity range of the total composition is fulfilled, known or commercially available epoxy compounds may be used. For example, as the epoxy compound, EX614B from Nagase, KETL6000 from Kolon, CL16 from Ipox Chemicals, or GE500 from Raschig, and the like may be used.

The above suggested commercially available sorbitol polyglycidyl ether may have epoxy equivalent weight (g/EQ) of 120~300 g/eq, and if the equivalent of sorbitol polyglycidyl ether is less than 120, a polymerization unit of epoxy resin may be small, and thus, it may be difficult to form a network structure between isocyanates. And, if it is greater than 300, the amount of epoxy per unit molecule may be relatively insufficient, and thus, adhesive strength may be deteriorated.

The adhesive composition for tire cord may include 0.1 to 10 wt% of the epoxy compound.

The latex included in the adhesive composition for a tire cord is a component used considering the use of the composition.

Specifically, the adhesive composition may be used for an adherend component such as a rubber complex, a rubber structure, or a rubber reinforcement material, and in case latex is used, it may be favorable for securing affinity, compatibility, or adhesive strength with an adherend. According to circumstances, the latex component included in the adhesive composition may be identical to the rubber component of an adherend.

According to one example, the latex may not include resorcinol-formaldehyde or components derived therefrom. Namely, the composition may be an RF-free composition. Thus, an environment-friendly adhesive composition that is not harmful to the human body compared to the prior art using RF latex can be provided. And, the use of such an adhesive composition has an advantage of reducing post management and post treatment costs.

The kind of latex that can be used in the composition is not specifically limited as long as it does not include resorcinol-formaldehyde or components derived therefrom, and the above explained viscosity of the total composition is fulfilled.

According to one example, as the latex, natural rubber latex, vinylpyridine-styrene-butadiene-copolymer latex (VP latex), styrene-butadiene-based copolymer latex, acrylic acid ester-based copolymer latex, butyl rubber latex, chloroprene rubber latex, or modified latex thereof may be used. For the modified latex, methods of modifying latex or specific kinds of latex are not limited. For example, modified latex obtained by modification of vinyl-pyridine-styrene-butadiene-based copolymer with carboxylic acid and the like may be used.

Commercially available latex may also be used as long as the viscosity of the total composition described below may be fulfilled. For example, as a VP latex, commercial products such as LM-60 from Denaka, VP-150 from APCOTEX, VB-1099 from Nippon A&L, or 5218 or 0653 from Closlen and the like may be used.

According to one example, a latex component including one or more of the above explained latex may be used in the adhesive composition.

According to one example, the adhesive composition for tire cord may include 1.0 wt% to 30wt % of latex. In case the above range is fulfilled, it may be favorable for securing affinity, compatibility, or adhesive strength to a rubber-containing adherend for which the adhesive composition for a tire cord is used.

According to one example, the latex may be mixed with other components of the composition, while being dissolved in a solvent (water or organic solvent).

The amine compound included in the adhesive composition for a tire cord functions as a curing agent. Due to curing or cure acceleration by the amine compound, a stable coating layer may be formed.

In the adhesive composition for a tire cord, considering a viscosity decrease according to the use of alicyclic polyurethane resin having a weight average molecular weight (Mw) of 250,000 to 350,000 and a solvent (water), one or more kinds of amine compounds may be used. Specifically, the adhesive composition may include at least an amine compound having a chain structure.

According to one example, the amine compound having a chain structure may be a compound derived from a reaction of ethylene diamine and stearic acid. Herein, the carbon number of the amine compound may be 8 to 20 (product name: Acrawax™ C Dispersion from Lonza). The amine compound may exist in a solid or liquid state, and in case it exists as a solid, a solvent for dispersing it as a liquid may be used.

And, the kind of the amine compound is not specifically limited, and amine compounds that can be used as a curing agent may be used as the amine compound according to one example of the invention, without limitations. As the amine compound, for example, at least one of an alicyclic amine, an aliphatic amine, and an aromatic amine may be used.

More specifically, Piperazine from DAEJUNG, G640 from Kukdo Chemical, HK511 from Huntsman Corporation, and the like may be used as the amine compound according to one example of the invention.

Considering cure acceleration of the adhesive composition for a tire cord, the weight ratio of the amine compound having a chain structure to an alicyclic amine compound may be 1:1 to 3:1 or 7:1.

The adhesive composition for tire cord may include 0.1 to 10 wt% of the amine compound.

The adhesive composition for tire cord may include water ($H_2O$).

Specifically, the adhesive composition for a tire cord uses water as a solvent, instead of an organic solvent (such as toluene or ethanol), considering harmfulness to human body and the risk of fire. Namely, the adhesive composition for tire cord may be a water-based or aqueous composition.

According to one example, the water used as a solvent in the adhesive composition may be demineralized water.

According to one example, based on the total weight of the composition of which viscosity is measured, the content of water may be 50 wt% or more, or 65 wt% or more. Specifically, the lower limit of the content of water may be, for example, 70 wt% or more, 75 wt% or more, or 80 wt% or more. And, the upper limit of the content of water may be, for example, 95 wt% or less, 85 wt% or less, or 75 wt% or less. In case the above range is fulfilled, each component constituting the composition may be sufficiently dispersed in the solvent.

According to one example, the content of water in the total composition may mean the content of water mixed as a solvent.

According to one example, the content of water in the total composition may include not only the content of water mixed as a solvent, but also the content of water mixed in other components, such as water used to disperse the alicyclic polyurethane resin having a weight average molecular weight (Mw) of 250,000 to 350,000.

Meanwhile, the adhesive composition for a tire cord may further include one or more cross-linking agents selected from the group consisting of an isocyanate-based compound, an aziridine-based compound, and a metal chelate compound.

The kind of the cross-linking agent for endowing adhesive strength and cohesive strength is not specifically limited, and common compounds such as an isocyanate-based compound, an aziridine-based compound, an epoxy-based compound, a metal chelate compound, and the like may be used.

The adhesive composition for tire cord may include the cross-linking agent in the content of 1 to 20 wt%.

The cross-linking agent forms a three-dimensional network structure when heat treating the adhesive, thereby endowing adhesive strength and layer stability to a coating layer formed from the adhesive composition.

The kind of the isocyanate is not specifically limited, but it may be selected considering the viscosity range of the total composition as explained above. For example, as the isocyanate, a compound including an alicyclic group, i.e., an alicyclic isocyanate may be used. An aromatic polyisocyanate may secure a high reaction rate compared to a non-aromatic polyisocyanate, and thus, it may be favorable for increasing low viscosity of an aqueous composition.

According to one example, the aromatic group included in the isocyanate compound may be a phenyl group, and as the isocyanate including such an aromatic group, for example, methylene diphenyl polyisocyanate or polymethylene polyphenyl polyisocyanate, and the like may be used.

According to one example, the isocyanate compound may be a blocked isocyanate. The blocked isocyanate compound may be prepared by the reaction of adding known blocking agent to a polyisocyanate compound. As such a blocking agent, for example, phenols, such as phenol, thiophenol, chlorophenol, cresol, resorcinol, p-sec-butylphenol, p-tert-butylphenol, p-sec-amylphenol, p-octylphenol, p-nonylphenol; secondary or tertiary alcohols such as isopropyl alcohol, tert-butyl alcohol, and the like; aromatic secondary amines such as diphenylamine, xylidine, and the like; phthalimide; lactams such as δ-valerolactam, and the like; caprolactams such as ε-caprolactam; active methylene compound such as malonic acid dialkyl ester, acetylacetone, acetoacetic acid alkyl ester, and the like; oximes such as acetoxime, methylethyl ketoxime, cyclohexanone oxime, and the like; basic nitrogen compounds such as 3-hydroxypyridine, acidic sodium sulfite, and the like may be used.

More specifically, commercially available water-dispersed blocked isocyanate products, such as IL-6 from EMS, DM-6500 from MEISEI Chemical, and the like may be used as an isocyanate.

And, assumed that the above explained viscosity range of the total composition is fulfilled, known or commercially available isocyanate compounds may be used. For example, commercially available water-dispersed blocked isocyanate products, such as IL-6 from EMS or DM-6500 from MEISEI Chemical, and the like may be used.

Meanwhile, according to another embodiment of the invention, there is provided a tire cord including a fiber substrate; and an adhesive layer formed on the fiber substrate, and formed from the adhesive composition according to one embodiment,

For the details of the adhesive composition for tire cord according to the above embodiment, the above explanations are applied.

The adhesive composition for tire cord does not include resorcinol-formaldehyde or components derived therefrom, and thus is environment-friendly, and it can significantly improve adhesive strength or heat resistant adhesive strength between tire rubber and tire cord, and thus has high adhesive strength or heat resistant adhesive strength to tire rubber, and can improve the durability of a tire. And, according to the present disclosure, there is provided a tire including the tire cord.

Although specific use of the tire cord is not limited, due to the inclusion of the adhesive layer, higher adhesion to a hybrid cord can be realized, and it may be suitably used for a large tire requiring higher heat resistant adhesion.

According to yet another embodiment of the invention, there is provided a tire cord including a fiber substrate; and an adhesive layer formed on the fiber substrate, and including an epoxy compound; latex; an alicyclic polyurethane resin having a weight average molecular weight (Mw) of 250,000 to 350,000; and an amine compound.

The adhesive composition for tire cord does not include resorcinol-formaldehyde or components derived therefrom, and thus is environment-friendly, and it can significantly improve adhesive strength or heat resistant adhesive strength between tire rubber and a tire cord, and thus has high adhesive strength or heat resistant adhesive strength to tire rubber, and can improve the durability of a tire. And, according to the present disclosure, there is provided a tire including the tire cord.

The alicyclic polyurethane resin having a weight average molecular weight (Mw) of 250,000 to 350,000 may include a reaction product between polyisocyanate including one or more alicyclic groups having a carbon number of 4 to 30 and a polyol.

The alicyclic polyurethane resin may include 1 to 20 mol% of parts derived from one or more compounds selected from the group consisting of dimethylol butanoic acid and dimethylol propionic acid.

The fiber substrate may be a raw cord including a polyester fiber.

Although specific use of the tire cord is not limited, due to the inclusion of the adhesive layer, higher adhesion to a hybrid cord can be realized, and it may be suitably used for a large tire requiring higher heat resistant adhesion.

Meanwhile, according to yet another embodiment, there is provided a tire including the tire cord.

The pneumatic tire may include a tread part; one pair of shoulder parts respectively continued to both sides around the tread part; one pair of side wall parts continued to each shoulder part; one pair of bead parts respectively continued to each side wall part; a carcass layer formed inside the tread part, shoulder parts, side wall parts and bead parts; and a cord positioned inside the carcass layer; a belt part positioned between the inside surface of the treat part and the carcass layer; and an inner liner bonded to the inside of the carcass layer.

## [ADVANTAGEOUS EFFECTS]

According to the present disclosure, an environment-friendly adhesive composition for a tire cord that can significantly improve adhesive strength and heat resistant adhesive strength between tire rubber and a tire cord, and a tire cord that has high adhesive strength and heat resistance adhesive strength to the tire rubber, and thus, can improve the durability of tire, and a tire including the tire cord, can be provided.

## [BRIEF DESCRIPTION OF THE DRAWINGS]

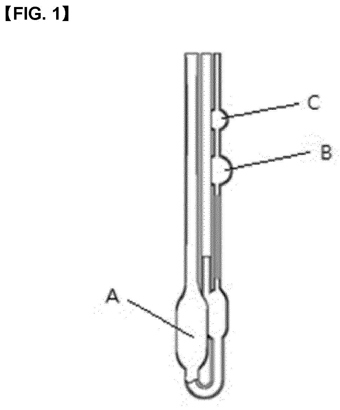

FIG. 1 is a schematic drawing showing an Ubbelohde viscometer used in Experimental Example 1.

## [DETAILED DESCRIPTION OF THE EMBODIMENTS]

This invention will be explained in more detail in the following examples. However, these examples are presented only for illustration of the invention, and the scope of the invention is not limited thereby.

**[Examples and Comparative Examples: Preparation of adhesive composition for tire cord and tire cord]**

## Example 1

**(1) Synthesis of water-dispersed polyurethane resin**

At the mole ratio described in the following Table 1, polyester polyol (weight average molecular weight: 2000), diol(1,6-hexanediol), and dimethylol butanoic acid (DMBA) were introduced, and mixed at 75±5 °C and atmospheric pressure for 4 hours.

And, at the mole ratio described in the following Table 1, 4,4'-dicyclohexylmethane diisocyanate (H$_{12}$MDI) was added to the mixture, and reacted for 2 hours to prepare an alicyclic polyurethane prepolymer.

The reaction temperature of the prepolymer prepared above was lowered to 60 °C, and a neutralizing agent (triethanolamine; TEA) was introduced in a solvent (acetone) to disperse. Herein, a stirrer was used for dispersion, and RPM of the stirrer was maintained at 1000 to 1500. After the dispersion was completed, the prepolymer was decompressed to remove acetone.

Into the neutralized prepolymer, distilled water was introduced such that the solid content became 60 %. And, a chain extender (ethylene diamine; EDA) was added to prepare water-dispersed alicyclic polyurethane (weight average molecular weight: 308,000 g/mol).

**(2) Preparation of adhesive compositions for tire cord**

The components were mixed at the content ratio (wt%) as described in the following Table 4, and stirred at a temperature of about 20 °C for 24 hours to prepare each composition of the examples and Comparative examples.

**(3) Preparation of tire cord**

2 strands of first twist yarns (Z-direction) (111, 112) with the twist number of 360 TPM were prepared using polyester yarn, and then, the two strands of first twist yarns (111, 112) were secondarily twisted together at the twist number of 360 TPM to prepare a ply yarn (1650dtex/2 ply). The ply yarn thus prepared was used as a raw cord (110).
The raw cord (110) consisting of polyester was immersed in the first coating solution, and then treated at a drying temperature of 150 °C and a curing temperature of 240 °C, respectively for 1 minute, to form a first coating layer (211), thus providing reaction active groups to the raw cord (110).
And then, in order to provide an adhesive composition to the raw cord (110) on which the first coating layer (211) was formed, the raw cord (110) on which the first coating layer (211) was formed was immersed in the second coating solution, then dried and cured. Herein, drying and curing were conducted by treating at a drying temperature of 150 °C and a curing temperature of 235 °C, respectively, for 1 minute. The first coating solution immersion process and the second coating solution immersion process were continuously conducted, wherein tension was 0.5 g/d. Thereby, tire cord (201) was prepared in the form of dipper cord.

**Examples 2 to 10**

**(1) Synthesis of waster-dispersed polyurethane resins**

Water-dispersed alicyclic polyurethane was prepared by the same method as Example 1, except that the mole ratio of components used were changed as described in the following Table 1 or Table 2.

**(2) Preparation of adhesive compositions for tire cord**

The components were mixed at the content ratio (wt%) as described in the following Table 4 or Table 5, and stirred at a temperature of about 20 °C for 24 hours to prepare each composition.

**(3) Preparation of tire cord**

Tire cords were prepared by the same method as Example 1, except that the adhesive compositions for a tire cord were changed.

**Comparative Examples 1 to 5**

**(1) Synthesis of water-dispersed polyurethane resins**

Water-dispersed alicyclic polyurethane was prepared by the same method as Example 1, except that the mole ratio of the components used were changed as described in the following Table 3.
Herein, the weight average molecular weights of the water-dispersed alicyclic polyurethane resins respectively used in Comparatives Example 1 to 4 are as described in Table 3, and in Comparative Example 5, methylene diphenyl diisocyanate (MDI) aromatic diisocyanate was used instead of 4,4'-dicyclohexylmethane diisocyanate.

**(2) Preparation of adhesive compositions for tire cord**

The components were mixed at the content ratio (wt%) as described in the following Table 6, and stirred at a temperature of about 20 °C for 24 hours to prepare each composition.

**(3) Preparation of tire cords**

Tire cords were prepared by the same method as Example 1, except that the adhesive compositions for a tire cord were changed.

**[Table 1]**

| (unit: mole ratio) | Example 1 | Example 2 | Example 3 | Example 4 | Example 5 |
|---|---|---|---|---|---|
| (A) Polyester polyol | 1 | 0.5 | 2 | 1 | 1 |
| (B) Diol | 0.2 | 0.2 | 0.2 | 1 | 2 |
| (C) DMBA | 0.8 | 0.8 | 0.8 | 0.8 | 0.8 |
| (D) $H_{12}$MDI | 2 | 2 | 2 | 2 | 2 |
| (E) EDA | 1 | 1 | 1 | 1 | 1 |
| (F) TEA | 7 | 7 | 7 | 7 | 7 |
| Mw (g/mol) | 308,000 | 286,000 | 346,000 | 316,000 | 322,000 |

**[Table 2]**

| (unit: mole ratio) | Example 6 | Example 7 | Example 8 | Example 9 | Example 10 |
|---|---|---|---|---|---|
| (A) Polyester polyol | 1 | 1 | 1 | 1 | 1 |
| (B) Diol | 6 | 8 | 0.2 | 0.2 | 0.2 |
| (C) DMBA | 0.8 | 0.8 | 3 | 0.8 | 0.8 |
| (D) $H_{12}$MDI | 2 | 2 | 2 | 2 | 2 |
| (E) EDA | 1 | 1 | 1 | 4 | 1 |
| (F) TEA | 7 | 7 | 7 | 7 | 5 |
| Mw (g/mol) | 337000 | 342000 | 299000 | 319000 | 299000 |

**[Table 3]**

| (unit: mole ratio) | Comparative Example 1 | Comparative Example 2 | Comparative Example 3 | Comparative Example 4 | Comparative Example 5 |
|---|---|---|---|---|---|
| (A) Polyester polyol | 0.1 | 2.5 | 1 | 1 | 1 |
| (B) Diol | 0.2 | 0.2 | 0 | 12 | 0.2 |
| (C) DMBA | 0.8 | 0.8 | 0.8 | 0.8 | 0.8 |
| (D) $H_{12}$MDI | 2 | 2 | 2 | 2 | - |
| (D) MDI | - | - | - | - | 2 |
| (E) EDA | 1 | 1 | 1 | 1 | 1 |
| (F) TEA | 7 | 7 | 7 | 7 | 7 |
| Mw (g/mol) | 231000 | 364000 | 217000 | 379000 | 315000 |

**[Table 4]**

| (unit: wt%) | Example 1 | Example 2 | Example 3 | Example 4 | Example 5 |
|---|---|---|---|---|---|
| (A) latex | 14.7 | 14.7 | 14.7 | 14.7 | 14.7 |
| (B) water-dispersed polyurethane | 1.5 | 1.5 | 1.5 | 1.5 | 1.5 |
| (C) amine compound | 1.8 | 1.8 | 1.8 | 1.8 | 1.8 |

(continued)

| (unit: wt%) | Example 1 | Example 2 | Example 3 | Example 4 | Example 5 |
|---|---|---|---|---|---|
| (D) chain extender | 0.4 | 0.4 | 0.4 | 0.4 | 0.4 |
| (E) epoxy compound | 1.7 | 1.7 | 1.7 | 1.7 | 1.7 |
| (F) isocyanate | 3.4 | 3.4 | 3.4 | 3.4 | 3.4 |
| (G) solvent | 76.5 | 76.5 | 76.5 | 76.5 | 76.5 |
| TSC | 23.5 | 23.5 | 23.5 | 23.5 | 23.5 |

[Table 5]

| (unit: wt%) | Example 6 | Example 7 | Example 8 | Example 9 | Example 10 |
|---|---|---|---|---|---|
| (A) latex | 14.7 | 14.7 | 14.7 | 14.7 | 14.7 |
| (B) water-dispersed polyurethane | 1.5 | 1.5 | 1.5 | 1.5 | 1.5 |
| (C) amine compound | 1.8 | 1.8 | 1.8 | 1.8 | 1.8 |
| (D) chain extender | 0.4 | 0.4 | 0.4 | 0.4 | 0.4 |
| (E) epoxy compound | 1.7 | 1.7 | 1.7 | 1.7 | 1.7 |
| (F) isocyanate | 3.4 | 3.4 | 3.4 | 3.4 | 3.4 |
| (G) solvent | 76.5 | 76.5 | 76.5 | 76.5 | 76.5 |
| TSC | 23.5 | 23.5 | 23.5 | 23.5 | 23.5 |

[Table 6]

| (unit: wt%) | Comparative Example 1 | Comparative Example 2 | Comparative Example 3 | Comparative Example 4 | Comparative Example 5 |
|---|---|---|---|---|---|
| (A) latex | 14.7 | 14.7 | 14.7 | 14.7 | 14.7 |
| (B) water-dispersed polyurethane | 1.5 | 1.5 | 1.5 | 1.5 | 1.5 |
| (C) amine compound | 1.8 | 1.8 | 1.8 | 1.8 | 1.8 |
| (D) chain extender | 0.4 | 0.4 | 0.4 | 0.4 | 0.4 |
| (E) epoxy compound | 1.7 | 1.7 | 1.7 | 1.7 | 1.7 |
| (F) isocyanate | 3.4 | 3.4 | 3.4 | 3.4 | 3.4 |
| (G) solvent | 76.5 | 76.5 | 76.5 | 76.5 | 76.5 |
| TSC | 23.5 | 23.5 | 23.5 | 23.5 | 23.5 |

<Explanations of Tables 4 to 6>

(A) latex: VP latex 0653 from Closlen

(C) amine compound: Acrawax™ C Dispersion from Lonza

(D) chain extender: Piperazine

(E) epoxy compound: EX614B (Sorbitol Polyglycidyl Ether, Epoxy content: 167 g/eq, Viscosity (mPa·s): 21,200 ) from NAGASE

(F) isocyanate: IL-6 from EMS

(G) solvent: Demineralized water

TSC: Total Solid Contents

**[Experimental Examples]**

**Experimental Example 1: Measurement of viscosities of the compositions of Examples and Comparative Examples**

The viscosity of each composition of the examples and comparative examples prepared above was measured at room temperature (about 25 °C) using an Ubbelohde viscometer.

The composition was left in a constant temperature water tank (about 25 °C) for 30 minutes, and then measured using the Ubbelohde viscometer. Specifically, through the following process, a certain amount of demineralized water was put in the Ubbelohde viscometer and the viscosity property of demineralized water was measured, and the viscosity property of the composition was measured by the same method, and then relative viscosity was calculated based on the viscosity property of the demineralized water already measured.

The specific measurement method of viscosity is as follows, and the measurement results are shown in Table 7.

(1) A sample (composition or demineralized water) was introduced into the A tube of the Ubbelohde viscometer.
(2) After setting a constant temperature water tank at 25 °C, it is fixed so that the C part is immersed in the water tank, and left for 30 minutes.
(3) Using a pipette filler, the sample was positioned to the middle of the C part.
(4) The sample was flowed down, and a time from when the liquid surface of the sample passes through the upper gradation of B until the liquid surface of the sample passes through the lower gradation of B is measured.
(5) The measured time is applied to the relative viscosity calculation formula to calculate relative viscosity.

<Relative viscosity calculation formula>

T1 / T0
T1: a time from when the composition passes through the upper gradation of B until the composition passes through the lower gradation of B
T0: a time from when demineralized water passes through the upper gradation of B until demineralized water passes through the lower gradation of B

**Experimental Example 2: Evaluation of adhesive strength**

For each tire cord prepared in the examples and Comparative examples, in order to evaluate adhesive strength per unit area, adhesive peel strength of the tire cord was measured according to ASTM D4393.

Specifically, a rubber sheet with a thickness of 0.6 mm, a cord ply, and a rubber sheet with a thickness of 0.6 mm were sequentially stacked to prepare a specimen, and then, it was vulcanized at the pressure of 60 kg/cm$^2$ at 170 °C for 15 minutes to manufacture a sample.

And then, the vulcanized sample was cut to prepare a specimen having a width of 1 inch. For the prepared specimen, peel strength was tested at 25 °C, at a speed of 125 mm/min, using a universal testing machine (Instron), thus measuring the adhesive strength of the tire cord. Herein, the average value of load generated during peeling was assessed as adhesive strength. The evaluation of adhesive strength was progressed, and reported in the following Table 7.

**Experimental Example 3: Evaluation of thermal fatigue resistance**

For each tire cord prepared in the examples and comparative examples, fatigue resistance of each composition of the examples and comparative examples was measured.

Specifically, a rubber sheet with a thickness of 0.6 mm, a cord ply, a rubber sheet with a thickness of 0.6 mm, a cord ply, and a rubber sheet with a thickness of 0.6 mm were sequentially stacked to prepare a specimen, and then, it was vulcanized at a pressure of 60 kg/cm$^2$ at 170 °C for 15 minutes to manufacture a sample. And, the vulcanized sample was cut to prepare a specimen having a width of 1 inch. The fatigue of the prepared specimen can be evaluated by the adhesive strengths of the rubber compound and tire cord for the unflexed part and flexed part of the tire cord pad specimen, and observation of the interface.

In a fatigue tester, a specimen having a width of 1 inch was attached, and then preheated at 100 °C for 30 minutes. And then, tester conditions of 100,000 cycles at 180 rpm and load of 60 kg were established, and a 1 inch Flexing Roller was used. After the fatigue evaluation was finished, it was taken out of the tester and left at room temperature for 12 hours, and then a peel strength test was progressed at 25 °C, 125 mm/min, using a universal testing machine(Instron).

Thermal fatigue resistance was measured according to the following Formula 1, and the results are shown in the following Table 7.

[Formula1]

Fatigue (%) = (measurement results of adhesive strength for flexed part)

* 100 / (measurement result of adhesive strength for unflexed part)

[Table 7]

|  | Viscosity (RV) | Adhesive strength (%) | Thermal fatigue resistance (%) |
|---|---|---|---|
| Example 1 | 2.71 | 100 | 100 |
| Example 2 | 2.64 | 97 | 100 |
| Example 3 | 2.82 | 97 | 98 |
| Example 4 | 2.73 | 100 | 99 |
| Example 5 | 2.76 | 100 | 95 |
| Example 6 | 2.79 | 100 | 95 |
| Example 7 | 2.81 | 100 | 99 |
| Example 8 | 2.74 | 100 | 100 |
| Example 9 | 2.54 | 100 | 97 |
| Example 10 | 2.60 | 99 | 98 |
| Comparative Example 1 | 2.41 | 75 | 72 |
| Comparative Example 2 | 2.88 | 75 | 79 |
| Comparative Example 3 | 2.44 | 72 | 81 |
| Comparative Example 4 | 2.89 | 76 | 80 |
| Comparative Example5 | 2.92 | 77 | 79 |

As shown in Table 7, it was confirmed that the adhesive compositions for the tire cord of the examples have viscosities in the range of 2.50 to 2.85, and when applied, can improve adhesive strength of a tire cord to a carcass layer, and secure excellent heat resistant adhesive strength and thermal fatigue resistance.

To the contrary, it was confirmed that when the adhesive compositions for tire cord of the comparative examples are applied, sufficient adhesive strength of the tire cord to a carcass layer is not secured, and heat resistant adhesive strength and thermal fatigue resistance are relatively low.

**Claims**

1. An adhesive composition for a tire cord comprising: an epoxy compound; latex; an alicyclic polyurethane resin having weight average molecular weight (Mw) of 250,000 to 350,000; an amine compound; and water.

2. The adhesive composition for tire cord according to claim 1, wherein the alicyclic polyurethane resin having weight average molecular weight (Mw) of 250,000 to 350,000 comprises a reaction product between a polyisocyanate comprising one or more alicyclic groups having a carbon number of 4 to 30 and a polyol.

3. The adhesive composition for tire cord according to claim 1, wherein the alicyclic polyurethane resin is a water-dispersed alicyclic polyurethane resin formed from an alicyclic polyurethane ionomers.

4. The adhesive composition for tire cord according to claim 1, wherein the alicyclic polyurethane resin comprises 1 to 20 mol% of parts derived from one or more compounds selected form the group consisting of dimethylol butanoic acid and dimethylol propionic acid.

5. The adhesive composition for tire cord according to claim 1, wherein viscosity measured using a Ubbelohde viscometer at room temperature is in the range of 2.50 to 2.85.

6. The adhesive composition for tire cord according to claim 1, wherein the composition comprises 0.5 to 10 wt% of an alicyclic polyurethane resin having a weight average molecular weight (Mw) of 250,000 to 350,000.

7. The adhesive composition for tire cord according to claim 6, wherein the composition comprises:

   0.1 to 10 wt% of an epoxy compound;
   1 to 30 wt% of latex;
   0.5 to 10 wt% of an alicyclic polyurethane resin having weight average molecular weight (Mw) of 250,000 to 350,000;
   0.1 to 10 wt% of an amine compound; and
   50 to 95 wt% of water.

8. The adhesive composition for a tire cord according to claim 1, wherein the amine compound comprises an amine compound having a chain structure.

9. The adhesive composition for tire cord according to claim 1, wherein the adhesive composition for a tire cord further comprises one or more cross-linking agents selected from the group consisting of an isocyanate-based compound, an aziridine-based compound, and a metal chelate compound.

10. The adhesive composition for tire cord according to claim 1, wherein the adhesive composition for a tire cord comprises 50 wt% or more of water.

11. Tire cord comprising:

   a fiber substrate; and
   an adhesive layer formed on the fiber substrate, and formed from the adhesive composition of claim 1.

12. A tire cord comprising:

   a fiber substrate; and
   an adhesive layer formed on the fiber substrate, and comprising: an epoxy compound; latex; an alicyclic polyurethane resin having a weight average molecular weight (Mw) of 250,000 to 350,000; and an amine compound.

13. The tire cord according to claim 12, wherein the alicyclic polyurethane resin having a weight average molecular weight (Mw) of 250,000 to 350,000 comprises a reaction product between polyisocyanate comprising one or more alicyclic groups having a carbon number of 4 to 30 and a polyol.

14. The tire cord according to claim 12, wherein the alicyclic polyurethane resin comprises 1 to 20 mol% of parts derived from one or more compounds selected from the group consisting of dimethylol butanoic acid and dimethylol propionic acid.

15. The tire cord according to claim 12, wherein the fiber substrate is a raw cord comprising a polyester fiber.

16. A tire comprising the tire cord of claim 12.

【FIG. 1】

# EP 4 074 802 A1

| INTERNATIONAL SEARCH REPORT | International application No. |
|---|---|
| | **PCT/KR2021/004370** |

**A. CLASSIFICATION OF SUBJECT MATTER**

**C09J 119/02**(2006.01)i; **C08K 5/1515**(2006.01)i; **C08L 75/04**(2006.01)i; **C08K 5/17**(2006.01)i; **C09J 7/25**(2018.01)i; **B60C 9/00**(2006.01)i; **D02G 3/48**(2006.01)i

According to International Patent Classification (IPC) or to both national classification and IPC

**B. FIELDS SEARCHED**

Minimum documentation searched (classification system followed by classification symbols)

C09J 119/02(2006.01); B05D 7/02(2006.01); B60C 1/00(2006.01); C08G 18/32(2006.01); C08G 18/72(2006.01); C08J 3/03(2006.01); C09J 109/08(2006.01); C09J 163/00(2006.01); C09J 175/00(2006.01); C09J 175/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 타이어 코드(tire cord), 접착(adhesion), 폴리우레탄(polyurethane), 섬유(fiber)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2001-0068475 A (YONSEI NANOTECH CO., LTD. et al.) 23 July 2001 (2001-07-23) See abstracts; claims 1 and 3; example 5; and table 1. | 1-16 |
| Y | KR 10-2012-0023706 A (BRIDGESTONE CORPORATION) 13 March 2012 (2012-03-13) See claims 1, 6 and 9-12; paragraphs [0039] and [0044]-[0047]; and table 2, example 7. | 1-16 |
| Y | KR 10-2018-0110986 A (KOLON INDUSTRIES, INC.) 11 October 2018 (2018-10-11) See claims 1-22. | 1-16 |
| A | KR 10-2017-0001773 A (IREA CHEMICAL ENTERPRISE) 05 January 2017 (2017-01-05) See entire document. | 1-16 |
| A | KR 10-2015-0113745 A (KOLON INDUSTRIES, INC.) 08 October 2015 (2015-10-08) See entire document. | 1-16 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 July 2021** | **29 July 2021** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

EP 4 074 802 A1

**INTERNATIONAL SEARCH REPORT**

International application No.

**PCT/KR2021/004370**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2008-0034354 A (SK CHEMICALS CO., LTD.) 21 April 2008 (2008-04-21)<br>See entire document. | 1-16 |

Form PCT/ISA/210 (second sheet) (July 2019)

17

**INTERNATIONAL SEARCH REPORT**
Information on patent family members

International application No.

**PCT/KR2021/004370**

| Patent document cited in search report | | | Publication date (day/month/year) | Patent family member(s) | | | Publication date (day/month/year) |
|---|---|---|---|---|---|---|---|
| KR | 10-2001-0068475 | A | 23 July 2001 | KR | 10-0341870 | B1 | 24 June 2002 |
| KR | 10-2012-0023706 | A | 13 March 2012 | CN | 102414362 | A | 11 April 2012 |
| | | | | CN | 102414362 | B | 07 January 2015 |
| | | | | EP | 2426253 | A1 | 07 March 2012 |
| | | | | EP | 2426253 | A4 | 07 January 2015 |
| | | | | EP | 2426253 | B1 | 23 August 2017 |
| | | | | JP | 2012-125992 | A1 | 01 November 2012 |
| | | | | JP | 5677942 | B2 | 25 February 2015 |
| | | | | KR | 10-1650607 | B1 | 23 August 2016 |
| | | | | US | 2012-0041113 | A1 | 16 February 2012 |
| | | | | US | 9394647 | B2 | 19 July 2016 |
| | | | | WO | 2010-125992 | A1 | 04 November 2010 |
| KR | 10-2018-0110986 | A | 11 October 2018 | CN | 110520495 | A | 29 November 2019 |
| | | | | CN | 110520495 | B | 25 May 2021 |
| | | | | EP | 3569670 | A1 | 20 November 2019 |
| | | | | EP | 3569670 | A4 | 02 September 2020 |
| | | | | JP | 2020-506994 | A | 05 March 2020 |
| | | | | JP | 6816301 | B2 | 20 January 2021 |
| | | | | US | 2020-0010741 | A1 | 09 January 2020 |
| | | | | WO | 2018-182229 | A1 | 04 October 2018 |
| KR | 10-2017-0001773 | A | 05 January 2017 | KR | 10-1701758 | B1 | 06 February 2017 |
| KR | 10-2015-0113745 | A | 08 October 2015 | None | | | |
| KR | 10-2008-0034354 | A | 21 April 2008 | None | | | |

Form PCT/ISA/210 (patent family annex) (July 2019)